# EUROPEAN PATENT APPLICATION

(11) **EP 3 073 355 A1**
(43) Date of publication of application: **28.09.2016**
(21) Application number: 16162516.5
(22) Date of filing: 29.03.2016
(51) Int. Cl.: G06F 3/041, G06F 3/044

(54) **SYSTEM AND KIT FOR TRANSMISSION OF SIGNAL FROM AN IRREGULAR SURFACE OF A 3-D STRUCTURE TO A DETECTOR REGISTERING ELECTRIC IMPULSE, METHOD OF SIGNAL TRANSMISSION**

(30) Priority: 27.03.2015 CZ 20150219; 27.03.2015 CZ 201530902 U
(71) Applicant: Univerzita Palackého, 771 47 Olomouc (CZ)
(72) Inventor: Brus, Jan, 74258 Trnavka (CZ); Vondrakova, Alena, 77900 Bystrocice (CZ); Vozenilek, Vit, 77900 Olomouc (CZ)
(74) Representative: Hartvichova, Katerina

(57) **Abstract**

The present invention provides a system for transmission of signal from an irregular surface of a three-dimensional structure to a detector for registering electric impulse comprises a three-dimensional structure of a non-conductive material, having a first irregular surface and a second surface adapted for adjoining a detector, whereas the structure contains on its first irregular surface at least one first point made of a conductive material, and on its second planar surface at least one second point made of a conductive material, and wherein a second point is assigned to a first point, and the mutually assigned first and second points are conductively connected, and a software application which assigns a predetermined action to a signal in the spot in which a second point adjoins the detector.

The invention further provides a kit for signal transmission comprising said system and the detector for registering electric impulses. Furthermore, a method for signal transmission and a method for production of the three-dimensional structure are described.

## Description

### Field of Art

The present invention relates to a system for transmission of signal in a three-dimensional structure, to a method of production of said system and to use thereof.

### Background Art

In informatics, touchscreen is a designation for electronic visual display, capable of detecting the presence and the location of a touch on the displaying screen. The term usually designates touching by a finger or by a hand. Touchscreens are capable of detecting also further passive objects, such as a stylus. Touchscreens can be divided into several categories - capacitive, resistive, infrared touch interface, surface acoustic wave principle, optical camera arrangement, 3D touchscreens. Traditional touchscreens work in two dimensions and are usually formed of a capacitive touch display. The capacitive display is based on the conductivity of human body (or a conductive object touching the display). The display consists of an isoland and is coated by a transparent conductor. With regard to the fact that the human body is a conductor, touching the screen surface results in disturbance of the electrostatic field of the screen, said disturbance can be measured as a change in the capacitive resistance. Currently, touchscreens are a common component of the user interface of various products. The use of planar touchscreen under which virtual graphic elements are shown results in configurational limitations and necessity to adapt the control elements to various programs. The touch in a given location is transferred to the specific location in the graphic interface. However, current capacitative touchscreens (usually two-dimensional touchscreens) allow only a limited possibility of forming an idea about the represented objects by tactile response and by the shape of the represented object.

### Disclosure of the invention

The present invention provides a system for transmission of signal from an irregular (i.e., non-planar) surface of a three-dimensional structure to a detector for registration of electric impulses, said detector can be for example a device with capacitive display. The functioning of the system is such that the irregular surface of the three-dimensional structure contains at least one conductive point, and when the the user touches this conductive point, the signal is transmitted to a predetermined point on the detector and thus starts a predetermined action. When the detector is for example a tablet, a notebook, a mobile telephone with a capacitive display, or a similar device equipped with a processor, then a software application is uploaded in said processor, said software application after detecting of the signal on said predetermined point performs the predetermined action - the action can be peformed directly by the detector or by another device which is connected to the detector conductively or wirelessly.

The system contains the three-dimensional structure made of a non-conductive material, having a first irregular surface, and a second surface adapted to adjoin the detector, whereas the structure comprises at least one first point of a conductive material located on the first irregular surface, and at least one second point of a conductive material located on the second surface, wherein a second point is assigned to each first point, and the mutually assigned first and second points are conductively connected.

In one embodiment, exactly one second point is assigned to each first point, whereas one or more first points are assigned to each second point. The first point and the thereto assigned second point do not need to have the same size, e.g., a large first point may be assigned to a substantially smaller second point.

In another embodiment, a plurality of second points are assigned to each first point. The first point and the thereto assigned second point do not need to have the same size.

The mutually assigned first and second points are conductively connected so that this conductive connection does not cross a conductive connection of another group of mutually assigned first and second points, e.g., the signal from one first point produces a signal on the detector exactly in the thereto assigned second point (or in the thereto assigned plurality of second points).

The first point may protrude over the first irregular surface, or may be embedded in the first irregular surface, or it may be in the level of the first irregular surface.

In one embodiment, the first irregular surface can be covered with a removable layer of material, and openings are formed in said layer, said openings allowing access to the first conductive points. This embodiment allows to provide, for instance, one three-dimensional structure with several removable surface layers having various graphic designs.

Preferably, the signal on the first point is a touch of the finger of the user, which functions similarly as a touch of the finger of the user on a capacitive display. The conductive connection of the first and the second point transmits the electric signal through the three-dimensional structure into the second point which conductive adjoins to the detector, hence the signal corresponds to touching the detector directly by the finger of the user. Similarly, the signal can be also a touch by the an electrically conductive object.

In one embodiment, the first irregular surface and the second surface are arranged on opposite sides.

The second surface of the three-dimensional structure preferably contains at least in its part means for attachment to the detector. These means may include suction cups, adhesive spots, or circumferential regions formed of adhesive nanostructured material such as polyurethane plastic material.

The system may further contain a software application which assigns a predetermined action to the signal in the location of the second point on the detector, said action being performed when a touch is detected, and said action may include, for example, acoustic, visual, tactile (vibration) or other action. The action may be performed by the device containing the detector (e.g., when the detector is a tablet, a mobile telephone or a notebook with capacitive display, the action may be performed by the tablet, the mobile telephone, or the notebook itself), or the action may be performed by another device which is connected conductively or wirelessly with the detector.

The software application may function in any environment, e.g., Android, iOS/OS X,

Windows, WindowsPhone, Firefox, Linux, BlackBerry, Google Chrome OS, Unix-like, Non-Unix-like.

One software application may be capable of controlling several three-dimensional structures through several sub-applications. Particular actions must be assigned to individual second points on each controlled three-dimensional structure, preferably the software application is adapted to recognize a specific three-dimensional structure according to the distribution of the second points on the second surface and to activate automatically the corresponding sub-application.

The system according to the present invention is suitable in particular for education of children and adults, games, provision of information and knowledge to purblind, blind or otherwise handicapped persons, spatial presentation and navigation. Capacitive displays are capable of showing two-dimensional representations, while the system according to the present invention allows to work with three-dimensional representation, e.g., with three-dimensional models of reality, which upon the touching of a specific part (representing the first point) of the three-dimensional structure by the user are capable of performing an action (e.g., identify the relevant part, provide information about the relevant part, check that the user has touched the correct part, etc.). Thus, touch interactive 3D objects can be produced, such as 3D maps, 3D figures, 3D machine models, product models and other objects. The invention will be further explained using specific examples of carrying out the invention which should not be construed as further limiting, but are intended to illustrate several possible constructions and several possible uses of the invention.

Object of the present invention is further a kit comprising the system of the invention and a detector for registration of electric impulses. The detector may be a mobile telephone, a tablet or a computer (e.g., a notebook) with capacitive display. The detector may also be a computing device with a planar element for registering electric impulses which may not be a display, said planar element being connected to the computing device.

The three-dimensional structure may be attached to the detector in particular by applying and maintaining on the spot, by gluing, by means of clamps, suction cups or other elements suitable for attaching the three-dimensional structure to the detector, or to its capacitive display or to another planar element for registering electric impulses, respectively.

A method for production of the three-dimensional structure preferably consists in printing the three-dimensional structure by three-dimensional (3D) printing process, using a 3D printer. One 3D printing option is to print the structure layerwise, whereas each layer typically contains at least one region comprised of non-conductive material and at least one region comprised of conductive material. Before the printing itself, a first model having the shape of the three-dimensional structure is created in 3D modeling software, and a second model comprising the conductive points and their conductive connections in created in the 3D modeling software, and these two models are merged into one model in the 3D modeling software.

Other methods of production may include co-extrusion of conductive and non-conductive parts, molding, gluing or lathing the model from non-conductive material and subsequent drilling of channels for conductive connections and attachment of the first and the second points.

Different 3D printing processes can be used for production of conductive and non-conductive parts.

The production of the non-conductive part of the model can also utilize technologies based on application of layers, usually paper layers, and their subsequent cutting into the final form, or technologies of silicon forming by vacuum molding.

The non-conductive part of the three-dimensional structure can preferably be made of materials selected from the group comprising non-conductive thermoplasts (e.g., ABS, PLA, polyethylene terephthalate, PC, nylon, polyphenylsulfone, polyoxymethylene, high density polyethylene (HDPE), PVA, PVC, polypropylene PP), non-conductive polymers (e.g., UV-hardened polymers, Vis-hardened polymers), polyurethanes, polysiloxanes, paper, waxes, resins.

The 3D printing process can also be performed using the technology of printing from two or more materials, wherein one material - "support" - is removed, e.g., by dissolution and washing away, after the printing the finalized. This technology can be used for producing objects with channels and openings. Suitable materials for these "supports" include, e.g., polyvinylalcohol (PVOH, PVA, or PVAL), High Impact Polystyrene (HIPS). Use of this technology allows to produce, e.g., channels for introduction of the first and the second points and their conductive connections, or channels and openings that are conserved in the final form of the three-dimensional structure, or three-dimensional structures with complex shapes.

The conductive part of the three-dimensional structure can be produced in particular from materials selected from the group comprising conductive thermoplasts (e.g., ABS, PLA, polyethylenterephthalate, polycarbonate, nylon, polypropylene containing carbon fibers, carbon nano-tubes or inherently conductive substances or graphene), metals, conductive polymers containing carbon or metal particles.

### Brief Description of Drawings

Fig. 1 represents embodiment according to Example 1, wherein the three-dimensional structure is a model of a mountain range, and the detector is a tablet.
Fig. 2 represents embodiment according to Example 2, wherein the three-dimensional structure has the shape of a globe, and the detector is a tablet.
Fig. 3 represents embodiment according to Example 3, wherein the three-dimensional structure has the shape of a human body, and the detector is a tablet.
Fig. 4 represents embodiment according to Example 4, wherein the three-dimensional structure has the shape of a building, and the detector is a tablet.
Fig. 5 represents embodiment according to Example 5, wherein the three-dimensional structure is composed of several parts and the detector is located on the side of the structure. The detector is a tablet.
Fig. 6 represents embodiment according to Example 6, wherein the three-dimensional structure with a regular distribution of the first and the second points is placed onto a detector in the form of a tablet, with differing set-ups of the software application.
Fig. 7 represents embodiment according to Example 7, wherein the three-dimensional structure has a differing distribution of the second points, and the software application registers this disctribution pattern. The detector is a tablet.
Fig. 8 represents embodiment according to Example 8, wherein the three-dimensional structure is attached by various means to the detector which is a tablet.
Fig. 9 represents embodiment according to Example 9, wherein a software application, using the three-dimensional structure placed on the detector which is a tablet, is wirelessly and interactively interconnected with another screen.
Fig. 10 represents embodiment according to Example 10, and shows various modifications of delimiting components for correct placing of the three-dimensional structure onto the detector.
Fig. 11 represents embodiment according to Example 11, wherein a relief map is adjoined to the detector which is a tablet.
Fig. 12 represents embodiment according to Example 12, wherein a haptic map is adjoined to the detector which is a tablet.
Fig. 13 represents embodiment according to Example 13, wherein an upper layer is added to the three-dimensional structure containing a conductive and a non-conductive part, said upper layer being produced separately by a different 3D printing method than the other parts.
Fig. 14 represents embodiment according to Example 14, wherein a detector which is a tablet is attached to the bottom part of a large three-dimensional structure.
Fig. 15 represents embodiment according to Example 15, wherein a detector which is a tablet is attached to the bottom part of a large three-dimensional structure, and the controlling software application is connected to a beamer.
Fig. 16 represents system structure according to Example 16.

In all figures, non-conductive parts of the three-dimensional structure are shown in light grey and the conductive parts are shown in black.

### Examples of carrying out the Invention

### Example 1

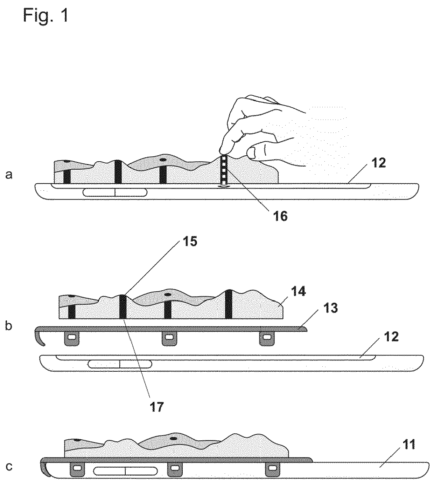

Embodiment according to this example is shown in Fig. 1. The three-dimensional structure 14 has the shape of a mountain range ( 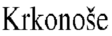 mountains) and is made of a non-conductive material. First points 15 are located on the irregular first surface and are conductively connected through a conductive connection 16 with second points 17 on the planar second surface. The first points 15, the second points 17 and the conductive connection 16 are made of a conductive material. The three-dimensional structure is shown in a cross-sectional view on Fig. 1a, and is adjoined to a detector 11 which is a tablet with display 12. Fig. 1c shows the three-dimensional structure 14 attached to the detector 12 by means of a circumferential clamp 13. Fig. 1b shows an exploded view of the embodiment of Fig. 1c, with the three-dimensional structure 14 shown in cross-sectional view. Detector 12 is a tablet with an uploaded application assigning predetermined actions to electric signals in the locations of second points 17 after adjoining the three-dimensional structure 14 onto the tablet 12 display, and performing these actions every time the signal is detected. The signal is detected when the user touches a first point 15 by his finger (see Fig. 1a), because the electric signal produced by the contact of the conductive finger is then transmitted via the conductive connection 16 to the second point 17 which transmits this signal to the adjoined spot on the tablet touchscreen 12. The action may be, for instance, a provision of visual or acoustic information about the mountain or the region in which the first point 15 which was touched by the user is located. The thus produced 3D maps can be used as educational tools or exhibits for purblind or blind people, allowing them to obtain an exact idea of the form of the mountain range, together with receiving acoustic information about individual elements of the landscape. The maps can also be used as navigation tools, together with a built-in location (GPS) device.

### Example 2

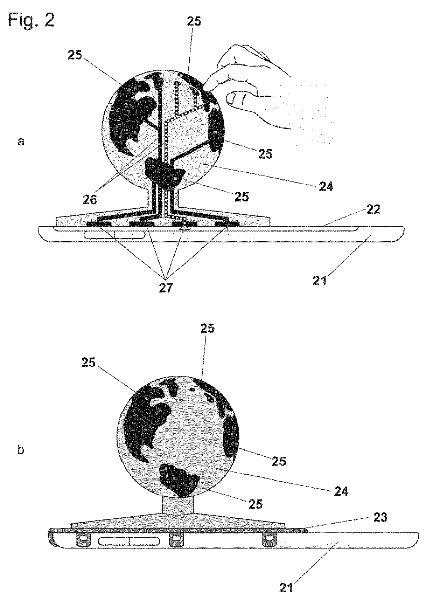

Embodiment according to this example is shown in Fig. 2. The three-dimensional structure has the form of a globe with a base, the base adjoining the detector. The globe 24 volume is made of a non-conductive material. Individual continents and islands on the globe 24 surface are made of a conductive material and act as first conductive points 25. They are conductively connected through conductive connections 26 with the assigned second points 27 located on the base, said base representing the second surface. Conductive connections 26 are arranged so that each continent 25 and the thereto belonging islands 25 are always connected with one second conductive point 17 (i.e., a plurality of first points are assigned to one second point). The detector is a tablet 21 with a display 22 and with an uploaded software application which assigns predetermined actions to signals located on the tablet 21 display 22 in the regions adjoining the second points on the base of the three-dimensional structure 24 - e.g., provision of visual or acoustic information about the relevant continent 25. The three-dimensional structure 24 is attached through a clamp 13 to the tablet 11. The globe can serve as educational took or as a tool for purblind or blind people.

### Example 3

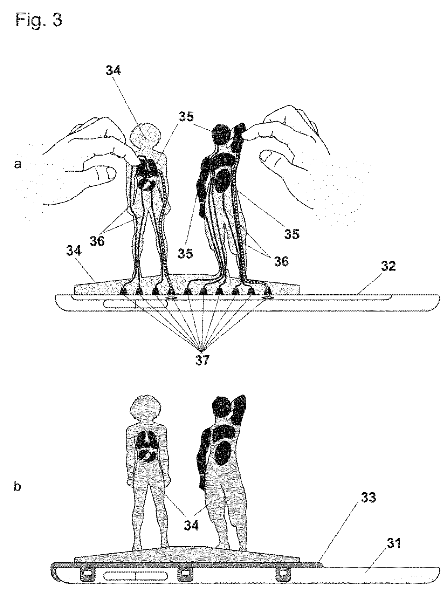

Embodiment according to this example is shown in Fig. 3. The three-dimensional structure 34 has a shape of human body with a base, said base adjoins a detector 31, which is a tablet 31 with display 32. The volume of the body is made of a non-conductive material. Individual parts of the human body are made of conductive material and act as first conductive points 35. They are conductively connected through conductive connections 36 with the thereto assigned second points on the base 37 which is a second surface. Exactly one second point 37 is assigned to each first point 35. First points 35 can form a part of the model, e.g., a whole arm. The detector 31 is a tablet with an uploaded software application which assigns a predetermined action to signals in the regions on the tablet display 32 adjoining the second points 37 located on the three-dimensional structure 34 base. The actions may be e.g., launching the pronunciation of the organ name in foreign language, visual representation of said organ, organ name in foreign language, etc. The device can serve as educational tool or as a tool for blind or purblind persons.

### Example 4

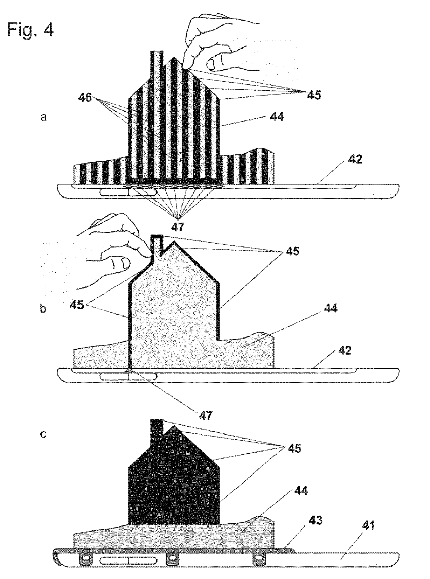

Fig. 4 shows the use of the invention in a model of a building. The three-dimensional structure 44 has the shape of a building. Fig. 4a shows the first points 45 located on the level of the non-conductive parts of the model and are evenly distributed. Through a conductive connection 46, said first points are connected with second points 47, adjoining the display 42 of a detector 41. The points are distributed so that by touching any part of the model, signal is transmitted from at least one first point 45 to at least one second point 47. This touch is registered on the detector 41 and a software application launches a predetermined reaction. Fig. 4b shows a cross-sectional view of the embodiment shown on Fig. 4c. In this embodiment, the first point 45 is formed by the surface of the model of the building. This surface in the form of the first point 45 is connected through a conductive connection with one second point 47 which adjoins the detector 41. Touching any part of the building model launches identical reaction of the software application. The device can serve as an educational tool, as a spatial navigational tool for purblind or blind persons or for presentation of, e.g., urbanistic studies.

### Example 5

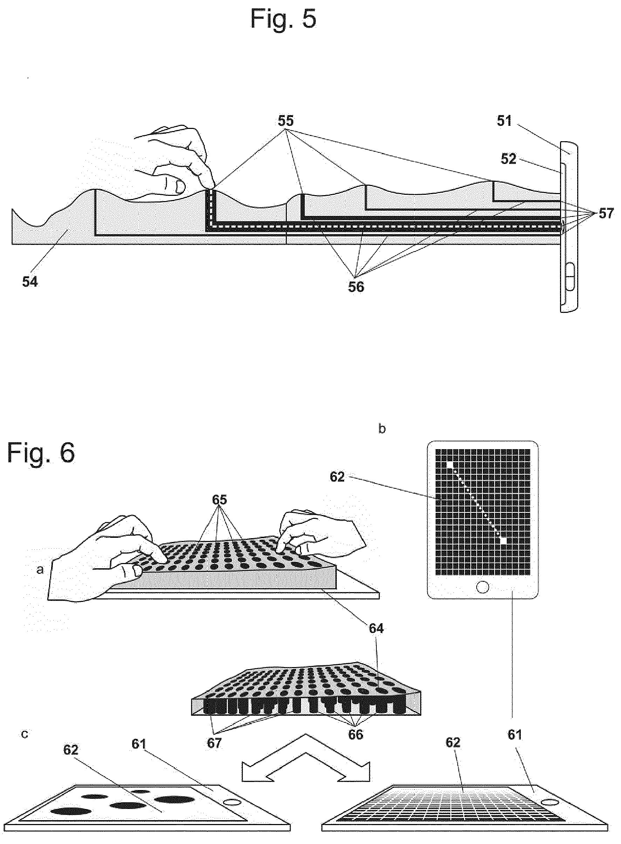

Fig. 5 shows the use of the invention with the location of the detector 52 on the side of the three-dimensional structure. The three-dimensional structure 54 is formed by a non-conductive part in which first points 55 are connected with second points 57 through conductive connections 56. First points 55 copy the shape of the upper part of the three-dimensional structure 54. Second points 57 are on the planar side part of the structure which adjoins the detector 51. Software application registers individual touches through display 52 of a tablet 51 and launches a predetermined reaction. The representation of the invention can be used for interactive navigation in buildings, for spatial presentations, for creation of models of towns, models of shopping malls, etc.

### Example 6

Fig. 6 shows an embodiment according to the invention using two solutions in a software application and a sensor screen 62. Fig. 6a shows a three-dimensional structure provided with regularly distributed first points 65 wherein each first point is connected with exactly one second point 67 using conductive connection 66. As shown in Fig. 6b, the software application uses for registering the touch only parts of the display in the form of planar elements of various sizes having. The reaction is produced by touching the three-dimensional structure exactly in the locations of the first points 65 which are connected with the planar elements actively functioning on the display through conductive connection 66 and through second points 67. Touching first points 65 that are connected with planar elements of the display having passive functions do not launch any action. In the embodiment shown on Fig. 6c, the software application is adapted to the distribution of the first 65 and for the second points 67 on the three-dimensional structure. Detector 61 is divided into individual elements so that each element of the display is assigned to exactly one second point 67. Change of settings of the software application can in both embodiments, Fig. 6b and Fig. 6c, result in different actions while using the same three-dimensional structure. Touch by several fingers (Fig. 6d) can achieve different actions than touch by only one finger. The touches can be combined to achieve different actions. This use of the invention is particularly suitable for navigation, distance measurement, or gesture control of software applications using three-dimensional structures.

### Example 7

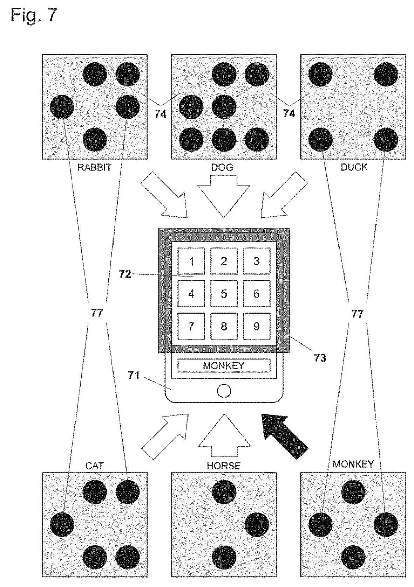

This embodiment is shown in Fig. 7. Individual three-dimensional structures 74 have different distribution of second points 77 on the side which adjoins the display 72 of the detector 71. First point is connected with all second points 77. The detector 71 is a tablet with an uploaded software application which registers the position of second points within a predefined region. In one setting, the application uses 9 points for activation, said points activate the detector 71 when the model 74 is placed on the detector. When the user places the model 74 onto the detector 71 and touches the first point, the second points 77 connect with the corresponding points on the detector 71. The spatial distribution of the points 77 unambiguously identifies a specific model and thus triggers a specific action. Uniqueness of individual codes ensures that an identical action is triggered also when the model is rotated by 90, 180 and 270°. This embodiment of the invention can be used, e.g., as an educational tool for language education or shape recognition. It can also be used as an educational tool for purblind and blind persons.

### Example 8

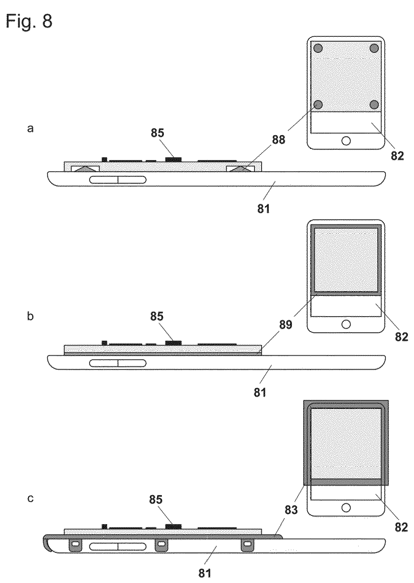

This embodiment is shown in Fig. 8. Fig. 8a shows a three-dimensional structure in the form of a haptic map with first points 85 attached by means of suction cups 88 to a detector 81 which is a tablet with a display 82. The suction cups 88 are distributed and attached so that the three-dimensional structure can be moved at any time. Fig. 8b shows a three-dimensional structure in the form of a haptic map, attached by means of a circumferential band 89 made of an adhesive nanostructured material. This material allows to attach the three-dimensional structure easily to any touchscreen. Fig. 8c shows a three-dimensional structure in the form of a haptic map attached to a tablet by means of a delimitation element 83 made of plastic.

### Example 9

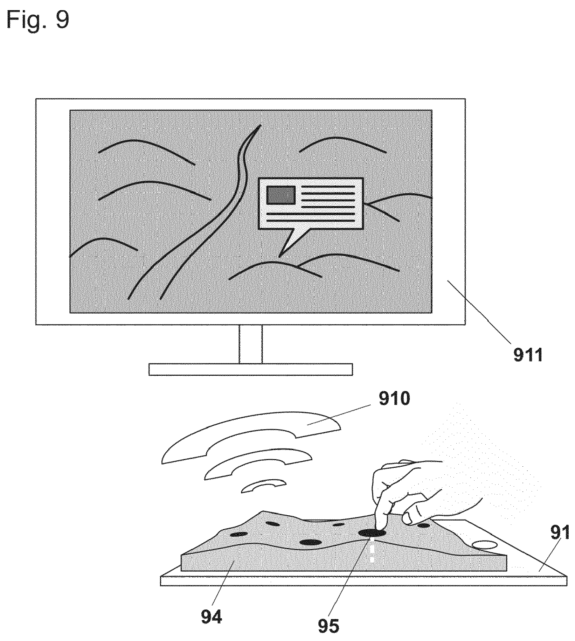

This embodiment is shown on Fig. 9. Non-conductive part of the three-dimensional structure 94 has the shape of a mountain range, and is placed on a tablet 91. Some parts of the structure are provided with first points 95 which react to touch. Software application is connected with a device with a display 911 by means of wireless technology, whereas touching the first points 95 of the three-dimensional structure 94 produces reactions which are shown on the display 911. For example, touching two first points 95 triggers representation of the profile of the trajectory, view of the indicated location and information about the summit on the display 911. These 3D maps can be used as an educational tools or as exhibits for promotional purposes, allowing the users to obtain new information together with acoustic information about individual parts of the landscape or the represented reality.

### Example 10

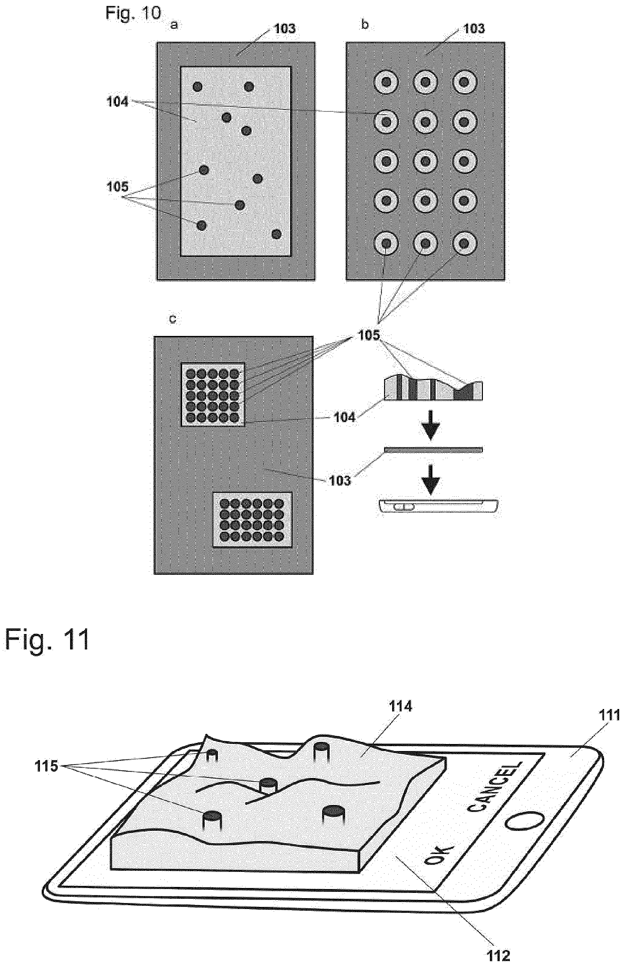

The embodiment is shown on Fig. 10. Individual three-dimensional structures can be placed onto the detector separately, Fig. 10a, or in several parts by means of shaped delimiting parts made of plastic or adhesive nanostructured material. Individual structures can be distributed regularly, Fig. 10b, or irregularly, Fig. 10c. This embodiment can be used for controlling smartphones, tablets, electronic book readers, navigations, remote controllers, vehicle displays or for controlling displays in industry. The figures show three-dimensional structures 104 provided with first points 105, inserted into spots delimited by delimitation elements 103.

### Example 11

This embodiment is shown on Fig. 11. Three-dimensional structure 114 in the form of a relief map is placed on a detector 111 which is a tablet with a display 112. Software application performs various actions upon registration of touches on first points 115. Further information can be provided in the bottom part of the display, the application may provide acoustic signals, transform text into speech, etc.

### Example 12

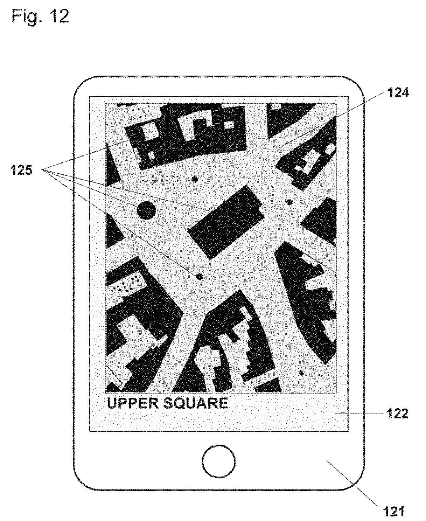

This embodiment is shown on Fig. 12. Three-dimensional structure 124 in the form of a haptic map is formed of a non-conductive and a conductive part containing first points 125. The three-dimensional structure 124 is attached to a detector 121 which is a tablet with a display 122. Touch on the part of the structure containing the first points 125 triggers an action of the software application. First points 125 may preferably be regions with Braill letters. This embodiment is particularly useful as a navigation tool for purblind and blind persons.

### Example 13

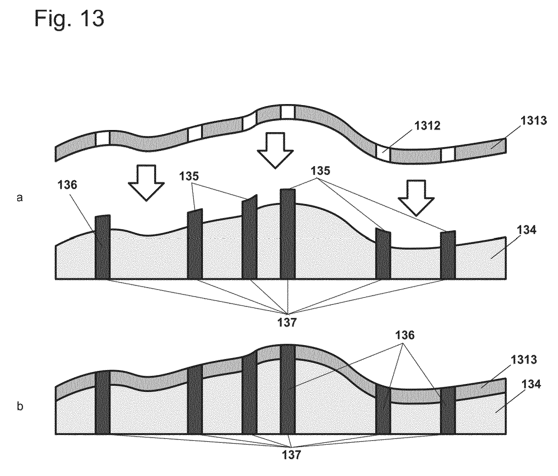

This embodiment is shown on Fig. 13. Fig. 13a shows a three-dimensional structure 134 containing first points 135, conductive connection 136 and second points 137 is printed using 3D printing method so that the first points 135 protrude over the surface of the non-conductive part of the three-dimensional structure 134. Preferably, another structure can be attached to this structure, said another structure is printed by another 3D printing method or produced using another method and contains a non-conductive part 1313 and openings 1312 corresponding to the locations of the first points 135 and conductive connections 136. The connected structures are shown on Fig. 13b. This embodiment is particularly suitable for fully textured models and models requiring a different material on the surface of the three-dimensional structure. The models can serve for promotional purposes, for navigation, etc.

### Example 14

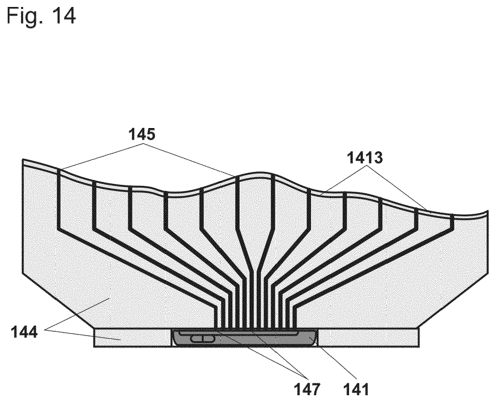

The embodiment is shown on Fig. 14. A large three-dimensional structure 144 consisting of a non-conductive part, first points 145, conductive connections and second points 147 is placed on a detector 141 which is a tablet. Textured structure 1413 produced by a different 3D printing method is placed on the irregular surface. Touch on the first points 145 is transmitted through conductive connections and registration of the signal in the second points 147 on the detector and produces an audiovisual action, preferably the device is connected to an external display. This embodiment is particularly suitable for presentation of large studies, developer plans, for army purposes, etc.

### Example 15

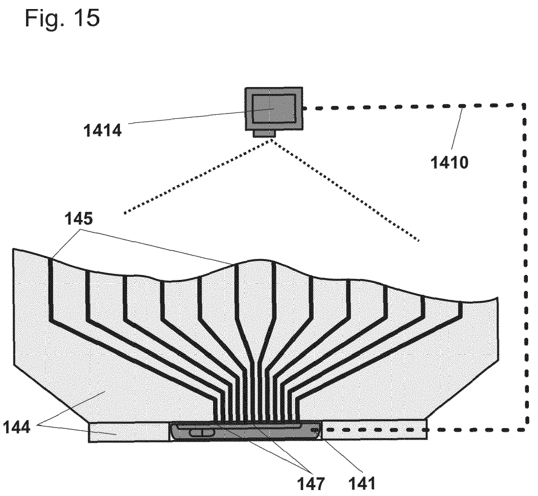

This embodiment, which is a variant of the embodiment of Example 14, is shown on Fig. 15. A large three-dimensional structure 144 consisting of a non-conductive part, first points 145, conductive connections and second points 147 is placed on a detector 141 which is a tablet. Touch on the first points 145 is transmitted through conductive connections and registration of the signal in the second points 147 on the detector and produces an audiovisual action. Software application uploaded in the tablet is then physically or wirelessly 1410 connected with a device 1414 which produces visual content on the three-dimensional structure 144 surface according to the reactions obtained by the touches to first points 145 of the three-dimensional structure 144. This embodiment is particularly suitable for presentation of large studies, developer plans, for army purposes, etc.

### Example 16

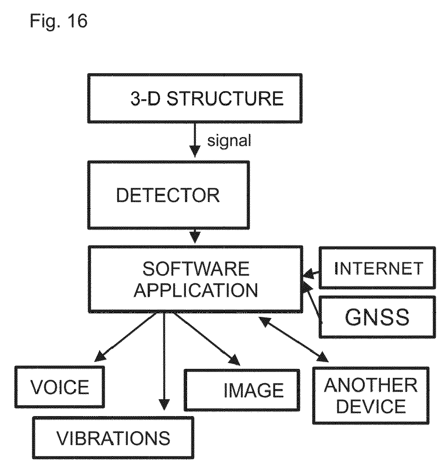

Structure of the system functioning is shown on Fig. 16. The three-dimensional structure serves as a source of information about the location of the touches. Individual touches are then transmitted to a detector. The detector is used by a software application which may perform various actions based on the touches. The software application may also use localization services, obtain information from the Internet or communicate wirelessly with other devices, due to its integration in a tablet or a smartphone.

## Claims

1. A system for transmission of signal from an irregular surface of a three-dimensional structure to a detector for registering electric impulse, **characterized in that** it comprises:
▪ a three-dimensional structure of a non-conductive material, having a first irregular surface and a second surface adapted for adjoining a detector, whereas the structure contains on its first irregular surface at least one first point made of a conductive material, and on its second planar surface at least one second point made of a conductive material, and wherein a second point is assigned to a first point, and the mutually assigned first and second points are conductively connected, and
▪ a software application which assigns a predetermined action to a signal in the spot in which a second point adjoins the detector.

2. The system according to claim 1, wherein to each first point, one second point is assigned, while to each second point, one or more first points are assigned.

3. The system according to claim 1, wherein a plurality of second points are assigned to one first point.

4. The system according to any one of the preceding claims, wherein the first irregular surface is covered with a removable layer of material, wherein said layer contains openings for accessing the first points.

5. The system according to any one of the preceding claims, wherein the first irregular surface and the second surface are on mutually opposite sides of the structure.

6. The system according to any one of the preceding claims, wherein the second surface comprises in at least part thereof means for attachment to the detector.

7. A method for signal transmission from the irregular surface of the three-dimensional structure of the system according to any one of the preceding claims to the detector for registering electric impulses, **characterized in that** the irregular surface of the three-dimensional surface comprises at least one conductive point, and when the user touches this conductive point, the signal is transmitted via the conductive connection and the second conductive point to a predetermined point on the detector adjoining the second conductive point, and by means of software application, a predetermined action is produced.

8. The method according to claim 7, wherein the software application has a plurality of sub-applications for controlling a plurality of three-dimensional structures, and wherein the software application identifies a specific three-dimensional structure based on distribution of the second points and automatically launches the corresponding sub-application comprising the predetermined actions.

9. A kit for signal transmission, **characterized in that** it comprises the system according to any one of claims 1 to 6 and a detector for registering electric impulses, preferably the detector is selected from the group comprising mobile telephone, tablet, computer with capacitive display.

10. The kit according to claim 9, wherein the three-dimensional stucture is attached to the detector by placing and mainitaining on a predetermined spot, by gluing, by clamps, by suction cups, by materials based on hook and loop fastener, or by means of a circumferential band made of an adhesive nanostructured material.

11. A method of production of the three-dimensional structure of the system according to any one of claims 1 to 6, **characterized in that** the three-dimensional structure is printed by a three-dimensional printing process using a 3D printer.

12. The method according to claim 11, wherein before the printing, a first model having the shape of the three-dimensional structure is created in a 3D modeling software, and a second model comprising the conductive points and their conductive connections in created in the 3D modeling software, and these two models are merged into one model in the 3D modeling software.
